# EUROPEAN PATENT APPLICATION

(11) **EP 2 093 420 A2**
(43) Date of publication of application: **26.08.2009**
(21) Application number: 09152573.3
(22) Date of filing: 11.02.2009
(51) Int. Cl.: F03D 9/00

(54) **System for improving performance of power constrained wind power plant**

(30) Priority: 21.02.2008 US 35214
(71) Applicant: General Electric Company, Schenectady, NY 12345 (US)
(72) Inventor: Morjaria, Mahesh, Marietta, GA 30062 (US)
(74) Representative: Bedford, Grant Richard

(57) **Abstract**

A wind turbine generation plant 10a including a wind turbine power generating system having at least one wind-driven rotor 16, 16a for transforming wind energy into rotational motion to provide electricity to a utility transmission system 12 is disclosed. A plurality of turbine generators 18, 18a is connected to one or more wind-driven rotors 16, 16a. An active power curtailment controller 22 is also provided. The active power curtailment controller 22 is configured to curtail an actual power output of the plurality of turbine generators 18, 18a at a predetermined maximum output power level, the predetermined output maximum output power level being less than an aggregate nominal power rating of the plurality of turbine generators 18, 18a.

## Description

The present invention relates generally to wind power energy production, and more particularly to a method and system for improving the energy production of wind plants by increasing the nameplate rating of the installed turbines.

Recently, wind turbines have received increased attention as an environmentally safe and relatively inexpensive alternative energy source. With this growing interest, considerable efforts have been made to develop wind turbines that are reliable and efficient.

A wind power generation system generally includes a wind plant having a plurality of wind turbine generators supplying power to a utility grid or other end user. Wind turbine power output is known to experience relatively rapid variations due to changes in wind speed, such as during gusts. Collective power output of the wind plant is greatly influenced by wind conditions on individual wind turbine generators. The inherent inertia of individual wind turbines and the varied operating conditions of wind turbines across a large wind plant may contribute, to an extent, to smoothing of some variation in power output of the wind plant. However, given the changeable nature of winds, it is possible that the collective output of a wind plant can vary from relatively low output levels to full power, and vice versa, in relatively short periods of time. Because electrical power is not stored on the power generation system in any meaningful quantities, it is essential that there always be a balance between electricity generated and electricity consumed.

It is possible to limit power output, and consequently power ramp-up rates of individual wind turbine generators at any level up to a maximum power available given the prevailing wind conditions. This is achieved by curtailing a portion of the power output, so that the power ramp rate does not exceed a maximum desired ramp rate. However this limits the capture of wind energy and increases the effective cost of energy of the wind plant. Similarly, in case of sudden fall in wind speeds, the output of the wind turbine generator may be controlled in a preemptive manner before the wind speed actually starts to fall, so that the power ramp-down rate is gradual and controlled to be within the ramp rate limits of the auxiliary power sources. Although useful as a means of controlling ramp rate, this again restricts power output of the wind turbine generator leading to a loss in wind energy capture.

Frequently a wind plant is constrained by utility regulations to an upper limit of output power that the plant must not exceed. The upper limit of the wind plant is typically the total installed capacity of the plant. A wind plant typically produces at the rated level for only a portion of time due to uncontrollable wind distribution and fluctuations, which are frequently not at the rated plant power output value. As a result, the total power produced by a typical power plant is normally less than a desired percentage of the total power capacity, and subject to significant variation in power output and ramp rates. Since the number and rating of turbine generators in the wind plant is typically equal to the upper limit of the constraint, there is no reserve power for providing ramp-down capability without sacrificing energy capture. Further, when one of the individual wind turbine generators fail, the wind plant cannot sustain the total rated capacity.

There is, hence, a need for a technique to control effective power output levels at a wind plant level to produce more energy limits and ramp rate restrictions prescribed by transmission system operators, while minimizing the loss of useful wind energy, and hence, the effective cost of energy.

According to an aspect of the present invention, a method of improving the performance of a wind turbine generating plant consists of increasing the name plate rating of the plant and limiting the output of the plant to the constrained value with an active power curtailment controller.

According to a first embodiment of the invention, there is a method for limiting an output power level in a wind turbine power generating system to a predetermined maximum power level. The method includes the steps of determining the predetermined maximum power level; providing at least one wind-driven rotor for transforming wind energy into rotational motion; connecting a plurality of turbine generators using the at least one rotor, each turbine generator of the plurality of turbine generators having a nominal maximum power output; configuring the plurality of turbine generators to provide an aggregate output power level equal to the nominal maximum power output times the number of turbine generators in the plurality of turbine generators, the aggregate power level being greater than the predetermined maximum power level when driven by the at least one rotor; and controlling the aggregate output power level at the predetermined maximum power level.

According to a second embodiment of the invention, a wind turbine power generating system includes at least one wind-driven rotor for transforming wind energy into rotational motion. A plurality of turbine generators is connected to one or more wind-driven rotors. An active power curtailment controller is also provided. The active power curtailment controller is configured to curtail an actual power output of the plurality of turbine generators at a predetermined maximum output power level, the predetermined output maximum output power level being less than an aggregate nominal power rating of the plurality of turbine generators.

One advantage is the wind turbine generating plant with capacity rating above the constrained power limit produces more energy over its lifetime by operating on average at a higher percentage of the constrained limit than a wind turbine generating plant rated the same as the constrained power limit.

Another advantage is that the power output of wind turbine generating plant with increased capacity rating is more stable than a generating plant with an aggregate power rating equal to the constrained limit, as measured by the variation in the output and the ramp rates.

A further advantage is that the impact of the unavailability of the turbines is reduced.

Yet another advantage is that reserve power can be maintained to provide down-ramp capability without large sacrifice in energy capture. These features make it easier to integrated the wind plant into the utility power system or grid.

Further aspects of the method and system are disclosed herein. The features as discussed above, as well as other features and advantages of the present invention will be appreciated and understood by those skilled in the art from the following detailed description and drawings, in which:
Figure 1 illustrates a schematic view of a prior art power constrained wind turbine generating plant wherein the total aggregate nameplate rating of the wind turbine generators is equal to the constrained power limit.
Figure 2 illustrates schematic view of a power constrained wind turbine generating plant wherein the total aggregate nameplate rating of the wind turbine generators exceeds the constrained power limit.
Figure 3 is a graphical illustration of a plant power curve comparison of wind turbine generator plants having different nameplate ratings.
Figure 4 is a graphical illustration of exemplary plant power output ranges for a constrained total plant power output.
Figure 5 is a graphical illustration of a general power curve and wind distribution curve.

The present invention now will be described more fully hereinafter with reference to the accompanying drawings, in which a preferred embodiment of the invention is shown. This invention may, however, be embodied in many different forms and should not be construed as limited to the embodiments set forth herein; rather, these embodiments are provided so that this disclosure will be thorough and complete and will fully convey the scope of the invention to those skilled in the art.

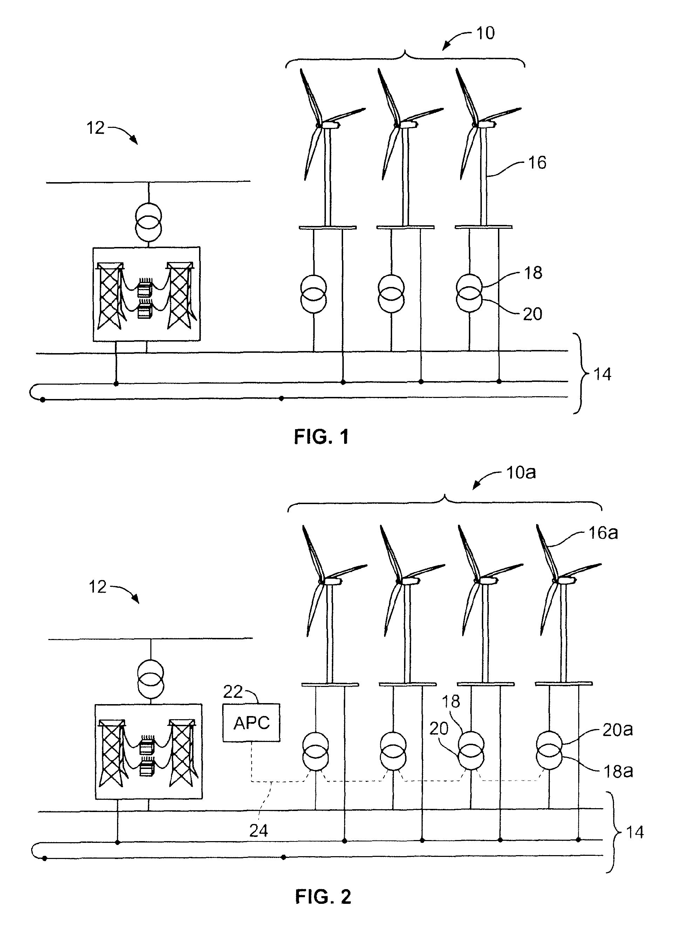

Fig. 1 shows an exemplary wind turbine generation plant 10 connected to an electrical utility transmission system 12 by a transmission system 14. In the exemplary wind turbine generating plant 10 of Figure 1, there are three bladed rotors 16, each bladed rotor driving a plurality of turbine generators 18. It will be understood that the turbine generators 18 are indicated by the symbol 20, which in this exemplary embodiment actually represents a plurality of twenty parallel-connected turbine generators 18, each turbine generator being rated at 1.5 megawatts (MW). In the wind turbine generating plant 10 there are three bladed rotors 16, and each of the bladed rotors drives a battery 20 of twenty 1.5 MW-rated turbine generators 18. I.e., the total nameplate rating of the wind turbine generation plant in Figure 1 is 90 MW. (The total number of turbine generators times the rated power output of each turbine generator 18). Assuming that the utility transmission system 12 regulates (or constrains) the maximum power output of the wind turbine generating plant to 90 MW, the nameplate rating of the wind turbine generating plant 10 is equal to the constrained upper limit.

Referring next to Figure 2, a wind turbine generating plant 10a of an embodiment of the present invention is shown, including an additional bladed rotor 16a and battery 20a of twenty turbine generators, for a total of four bladed rotors 16, 16a. Each of the individual turbine generator 18, 18a, has an output power nameplate rating of 1.5 MW. Similar to the example of Figure 1, the wind turbine generating plant 10 is connected to the utility transmission system 12 by a transmission line 14. The utility transmission system 12 is constrained to limit power output of the wind turbine generating plant 10 to 90 MW, in the same manner as in Figure 1. In the example of Figure 2, however, the number of 1.5 MW turbine generators 18, 18a, is eighty. The total nameplate rating of the wind turbine generating plant 10a is 120 MW, even though the total power output of the wind turbine generating plant 10a is constrained by the utility transmission system 12 to a maximum power output of 90 MW.

In order to meet the constrained maximum power requirements of utility transmission system 12, the wind turbine generating plant 10a is controlled by an active power curtailment controller 22, which governs the maximum output per turbine generator 18, 18a, and balances the load sharing between the turbine generators 18, 18a. Such active power curtailment controllers are well known in the art. An example of one such active power curtailment controller 22 is disclosed in U.S. Patent No. 7,199,482, and is hereby incorporated by reference. Another active power curtailment controller is disclosed in U. S. Patent Application Publication No. 20070001461, which is also incorporated by reference. An existing active power curtailment controller 22 has the ability to constraint the plant to a given value. The controller 22 may be modified so that (1) the MW constraint becomes the upper limit; (2) algorithms that take advantage of additional turbines are implemented; and (3) algorithms that provide more intelligent control functions e.g. ramp rates both increasing and decreasing power output rates, may be implemented. These features will make the wind turbine generating plant 10a easier to integrate in a utility grid as it will have functions similar to a conventional power plant. The aforementioned active power curtailment controllers are given by way of example and not limitation, as other such power curtailment controllers are known to persons skilled in the art. The active power curtailment controller 22 is in communication with each of the turbine generators 18, 18a through a communications channel 24, used for controlling load management and other functions of the respective turbine generators 18, 18a in the generator banks 20, 20a.

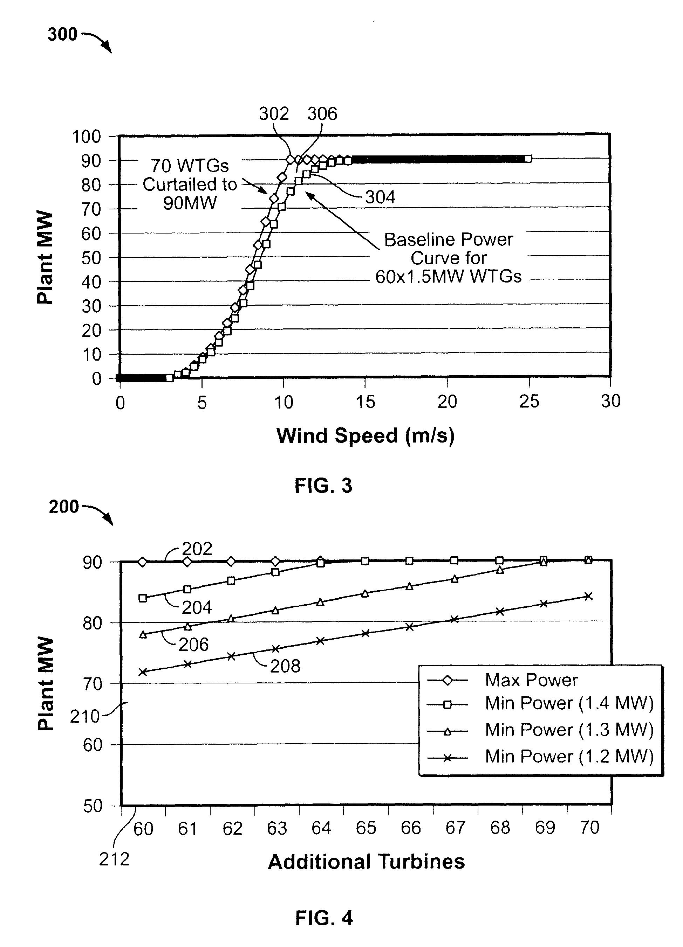

Referring next to Figure 3, a graph of a pair of power curves 302, 304 is shown. The first power curve, indicated by line 302 (marked at intervals with diamonds) represents the operating profile of the wind turbine generating plant 10a, in which 70 WTGs 18, 18a of 1.5 MW rating comprise the wind turbine generating plant 10a, and the wind turbine generating plant 10a is constrained or curtailed to a maximum power output level of 90 MW. The graph displays the total power output in MW of the wind turbine generating plant 10a as a function of wind speed, in meters per second (m/s). The second power curve, indicated by line 304 (marked at intervals with squares) represents a power curve of the wind turbine generating plant 10a, in which 60 WTGs 18, 18a of 1.5 MW rating comprise the wind turbine generating plant 10a, and the wind turbine generating plant 10a is constrained or curtailed to a maximum power output level of 90 MW. The second power curve is a baseline power curve representing the wind turbine generating plant 10 in which nameplate power rating is equal to the utility maximum power output constraint. As is readily apparent from the graph 300, an area 306 bounded by line 302 and line 304 represents the power output advantage realized by the wind turbine generating plant 10a with excess rated power, over the wind turbine generating plant 10 with rated power equal to the 90 MW constrained maximum power output level. The wind turbine generating plant 10a reaches 90 MW power output at wind speeds of slightly below 10 m/sec., approximately, and the wind turbine generating plant 10 does not achieve the output constrained limit until wind speed is roughly 13 m/sec. It is noted that in the example of Figure 3, wind turbine generating plant 10a has a total of 70 wind turbine generators 18, 18a, which is slightly less than indicated for wind turbine generating plant 10a in the illustration of Figure 2.

Referring next to Figure 4, a graphic illustration is shown of one example of the maximum power and minimum power ranges of two wind turbine generating plants 10, 10a, one rated for power output equal to the constrained maximum power level, and one rated greater than the constrained maximum power level.

In a power simulation analysis, adding 10% power capacity of the wind turbine generating plant increased the energy capture by 5.8% while increasing the cost of energy by only 4%.

Referring now to Figure 4, a graph 200 has four lines 202, 204, 206, 208 representing maximum or minimum power variations in the wind turbine generating plant 10, 10a, as described below. The graph offers a visual demonstration that the variation in the output power of the wind turbine generating plant 10, 10a decreases for each turbine generator that is added. The horizontal axis 212 indicates the total number of turbines in the wind turbine generating plant 10, 10a. The vertical axis indicated the total power output of the wind turbine generating plant 10, 10a. It is assumed that the total WTPG 10, 10a power output is constrained to 90 MW, and that the minimum number of generators to provide the constrained power limit of 90 MW is equal to sixty turbine generators 18, 18a, individually rated at 1.5 MW. The horizontal line 202 represents the constrained power limit of the wind turbine generating plant 10, 10a. The remaining lines 204, 206, 208 represent the total power output for different power variation levels caused by changes in the wind. Line 204 represents the case where each individual turbine generator output power level varies between 1.4 MW and 1.5 MW. In that case, the total plant power output at the minimum power level will total 84 MW for a wind turbine generating plant 10 having sixty turbine generators 18, leaving a deficit or variation range of 6.0 MW at the low end of the power output scale. For each 1.5 MW turbine generator 18a that is added, the variation between the maximum constrained power level 202 and the minimum power level is reduced. For example, for minimum power at 1.4 MW, indicated by line 204, a sixty-one generator wind turbine generating plant can output 85.4 MW, a sixty-two generator wind turbine generating plant can output 86.8 MW, a sixty-three generator wind turbine generating plant can output 88.2 MW, and a sixty-four generator wind turbine generating plant can output 89.6 MW. Thus with sixty-five generators in a wind turbine generating plant at a 1.4 MW minimum power, the variation is reduced to zero.

Similarly, if the minimum power level falls due to wind changes, to 1.3 MW, seventy generators, i.e., an additional five 1.5 MW generators, are required to reduce the variation to zero, as indicated by line 206. The greater the number of generators, the nearer to the maximum power line 202 the wind turbine generating plant will operate. For a minimum power level of 1.2 MW, as indicated by line 208, a seventy generator wind turbine generating plant will not generate the maximum power level, however, the wind turbine generating plant at the minimum power level will operate closer to the constrained limit than the standard sixty generator wind turbine generating plant.

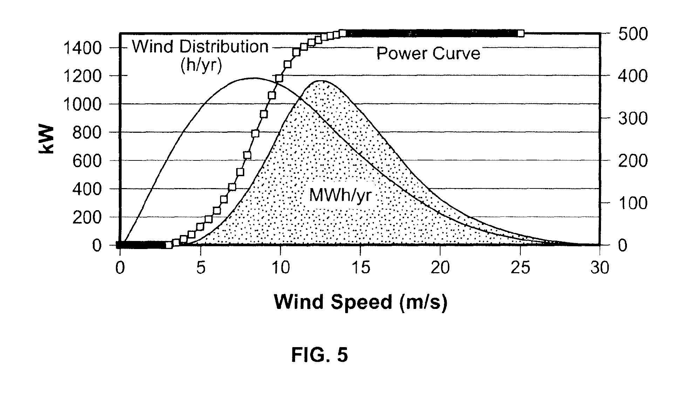

Referring now to Figure 5, a general power curve 500 and wind distribution curve 502 are shown. The power levels are indicated on the left vertical axis 504 and the hours per year (H/yr) are indicated on the right vertical axis 506. Wind speed is indicated along the horizontal axis 510, in units of meters per second. Another curve 510 indicates the total megawatt hours per year (MWh/yr) as a function of the wind speed. As curve 502 indicates, the wind speed in this example is most often concentrated between about five and ten meters per second, with a maximum wind distribution point 512 occurring at approximately seven meters per second (m/s), which occurs over approximately 400 hours per year. On curve 510, a maximum point 514 represents the peak megawatt distribution corresponding to about 12.5 m/s, which occurs for slightly less than 400 hours per year. Finally, the power curve 500 shows that the maximum curtailed power is also met at wind speed equal or greater than approximately 12.5 m/s. Below wind speeds of approximately 12.5 m/s, the wind turbine generating plant is not capable of providing the maximum curtailed power level.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A wind turbine power generating system (10) comprising:
at least one wind-driven rotor (16) for transforming wind energy into rotational motion;
a plurality of turbine generators (18) connected to the at least one wind-driven rotor; and
an active power curtailment controller (22);
the active power curtailment controller being configured to curtail an actual power output of the plurality of turbine generators at a predetermined maximum output power level, the predetermined output maximum output power level being less than an aggregate nominal power rating of the plurality of turbine generators.

2. The wind turbine power generating system (10) of claim 1, further comprising:
an electrical connection to an electrical utility transmission system (14).

3. The wind turbine power generating system (10) of any preceding claim, wherein the predetermined maximum power level is a constraint parameter set by the electrical utility transmission system (14).

4. The wind turbine power generating system (10) of any preceding claim, wherein the aggregate nominal power rating the plurality of turbine generators (18) is equal to 1.5 megawatts times a number of turbine generators in the plurality of turbine generators.

5. The wind turbine power generating system (10) of any preceding claim, wherein the active power curtailment controller (22) is further configured to balance a load distribution substantially equally between the plurality of turbine generators (18).

6. The wind turbine power generating system (10) of any preceding claim, wherein the active power curtailment controller (22) is further configured to operate at a maximum load duty cycle equal to between 80 and 95 % of total nominal maximum power output.

7. The wind turbine power generating system (10) of any preceding claim, wherein the predetermined maximum power level is 90MW, and the aggregate nominal power rating is at least 97.5 MW, the plurality of turbine generators (18) including sixty five turbine generators rated at 1.5 MW per turbine generator.

8. The wind turbine power generating system (10) of any preceding claim, wherein the predetermined maximum power level is 90MW, and the aggregate power level is at least 105 MW, the plurality of turbine generators (18) including seventy turbine generators rated at 1.5 MW per turbine generator.
